# EUROPEAN PATENT APPLICATION

(11) **EP 4 783 119 A1**
(43) Date of publication of application: **29.07.2026**
(21) Application number: 24867388.1
(22) Date of filing: 14.09.2024
(51) Int. Cl.: G06T 17/00, A61C 9/00, A61C 19/00

(54) **THREE-DIMENSIONAL DATA ACQUISITION METHOD AND APPARATUS, AND DEVICE AND STORAGE MEDIUM**

(30) Priority: 18.09.2023 CN 202311209071
(71) Applicant: Shining 3D Tech Co., Ltd., Hangzhou, Zhejiang 311258 (CN)
(72) Inventor: JIA, Yongjie, Hangzhou, Zhejiang 311258 (CN); JIANG, Tengfei, Hangzhou, Zhejiang 311258 (CN); ZHANG, Jian, Hangzhou, Zhejiang 311258 (CN); MA, Chao, Hangzhou, Zhejiang 311258 (CN)
(74) Representative: Metida
(86) International application number: PCT/CN2024/119076
(87) International publication number: WO 2025/060980

(57) **Abstract**

A method for acquiring three-dimensional data includes: acquiring three-dimensional scanning data of a prepared tooth during a process of eliminating an obscuring factor corresponding to an obscured area of the prepared tooth, wherein the obscured area is exposed by an auxiliary device on a three-dimensional scanner. Initial three-dimensional data corresponding to the obscured area of the prepared tooth is determined based on the three-dimensional scanning data. Once depth values of points in the initial three-dimensional data are determined, the initial three-dimensional data is processed based on the depth values to obtain target three-dimensional data of the obscured area. In this way, an operation to expose the obscured area on the user is not required, avoiding discomfort for the user, while ensuring an acquisition efficiency and an accuracy of the three-dimensional data of the obscured area. An apparatus for acquiring three-dimensional data, a device, and a storage medium are also provided.

## Description

The present application claims a priority to Chinese Patent Application No. 202311209071.8, filed with the China National Intellectual Property Administration on September 18, 2023, and entitled "METHOD FOR ACQUIRING THREE-DIMENSIONAL DATA, APPARATUS, DEVICE, AND STORAGE MEDIUM", the entire contents of which are incorporated herein by reference.

### TECHNICAL FIELD

The present disclosure relates to a field of three-dimensional scanning technology, and in particular, to a method for acquiring three-dimensional data, an apparatus, a device, and a storage medium.

### BACKGROUND

In scenarios such as dental restoration and dental aesthetics, it is necessary to acquire three-dimensional data of an obscured area around a prepared tooth and perform dental restoration or dental aesthetics based on the that data. For example, margin shoulder data of the prepared tooth is acquired, and a crown or porcelain restoration for the prepared tooth is fabricated based on the margin shoulder data to meet user needs for dental restoration or dental aesthetics.

In related technologies, a gingival retraction operation is first performed on the prepared tooth to expose the obscured area, and then data of this area is collected via an impression or a three-dimensional scanner as the three-dimensional data of the obscured area. However, the efficiency of acquiring three-dimensional data of the obscured area in this manner is relatively low, and it can also cause discomfort to the user.

### SUMMARY

To solve the above technical problems, the present disclosure provides a method for acquiring three-dimensional data, an apparatus, a device, and a storage medium.

According to a first aspect, the present disclosure provides a method for acquiring three-dimensional data. The method includes:
Acquiring three-dimensional scanning data of a prepared tooth during a process of eliminating an obscuring factor corresponding to an obscured area of the prepared tooth, wherein the obscured area is exposed by an auxiliary device on a three-dimensional scanner;
Determining initial three-dimensional data corresponding to the obscured area of the prepared tooth based on the three-dimensional scanning data;
Determining depth values of points in the initial three-dimensional data; and
Processing the initial three-dimensional data based on the depth values to obtain target three-dimensional data of the obscured area.

According to a second aspect, the present disclosure provides an apparatus for acquiring three-dimensional data. The apparatus includes:
A first acquisition module configured to acquire three-dimensional scanning data of a prepared tooth during a process of eliminating an obscuring factor corresponding to an obscured area of the prepared tooth, wherein the obscured area is exposed by an auxiliary device on a three-dimensional scanner;
A first determination module configured to determine initial three-dimensional data corresponding to the obscured area of the prepared tooth based on the three-dimensional scanning data;
A second determination module configured to determine depth values of points in the initial three-dimensional data; and
A second acquisition module configured to process the initial three-dimensional data based on the depth values to obtain target three-dimensional data of the obscured area.

According to a third aspect, embodiments of the present disclosure further provide an electronic device. The device includes:
A processor, a storage device, and instructions stored on the storage device and executable by the processor;
Wherein the processor reads the instructions from the storage device and, upon executing the instructions, implements the method provided in the first aspect.

According to a fourth aspect, embodiments of the present disclosure further provide a computer-readable storage medium having a computer program stored thereon. The computer program, when executed by a processor, implements the method provided in the first aspect.

Compared with the existing technology, the technical solutions provided by the embodiments of the present disclosure have the following advantages.

The method for acquiring three-dimensional data, apparatus, device, and storage medium provided by the embodiments of the present disclosure acquire three-dimensional scanning data of a prepared tooth during a process of eliminating an obscuring factor corresponding to an obscured area of the prepared tooth, wherein the obscured area is exposed by an auxiliary device on a three-dimensional scanner; determine initial three-dimensional data corresponding to the obscured area of the prepared tooth based on the three-dimensional scanning data; determine depth values of points in the initial three-dimensional data; and process the initial three-dimensional data based on the depth values to obtain target three-dimensional data of the obscured area. Thereby, during the process of using the auxiliary device to eliminate the obscuring factor corresponding to the obscured area of the prepared tooth, the target three-dimensional data of the obscured area is determined according to the depth values of the points in the scanned initial three-dimensional data of the prepared tooth. In this way, a gingival retraction operation on the user is not required, avoiding discomfort for the user, while also ensuring acquisition efficiency and accuracy of the three-dimensional data of the obscured area.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

To describe the technical solutions in the embodiments of the present disclosure or the prior art more clearly, the following briefly introduces the accompanying drawings required for describing the embodiments or the prior art. It is obvious that the accompanying drawings in the following description show merely some embodiments of the present disclosure, and a person of ordinary skill in the art may still derive other drawings from these accompanying drawings without creative efforts.
FIG. 1 is a schematic flowchart of a method for acquiring three-dimensional data provided by an embodiment of the present disclosure;
FIG. 2 is a schematic diagram of a prepared tooth provided by an embodiment of the present disclosure;
FIG. 3 is a schematic flowchart of S130 provided by an embodiment of the present disclosure;
FIG. 4 is a schematic structural diagram of an apparatus for acquiring three-dimensional data provided by an embodiment of the present disclosure;
FIG. 5 is a schematic structural diagram of an electronic device provided by an embodiment of the present disclosure.

### DETAILED DESCRIPTION

To make the objectives, technical solutions, and advantages of the present disclosure clearer, the solutions of the present disclosure will be further described in detail below. It should be noted that the embodiments of the present disclosure and the features in the embodiments may be combined with each other if no conflict is caused.

Many specific details are set forth in the following description to facilitate a full understanding of the present disclosure. However, the present disclosure may also be implemented in other ways different from those described herein. Obviously, the embodiments in the specification are only a part of, rather than all of, the embodiments of the present disclosure.

To avoid causing discomfort to a user undergoing gingival retraction while ensuring the acquisition efficiency and accuracy of margin shoulder data, embodiments of the present disclosure provide a method for acquiring three-dimensional data, an apparatus, a device, and a storage medium.

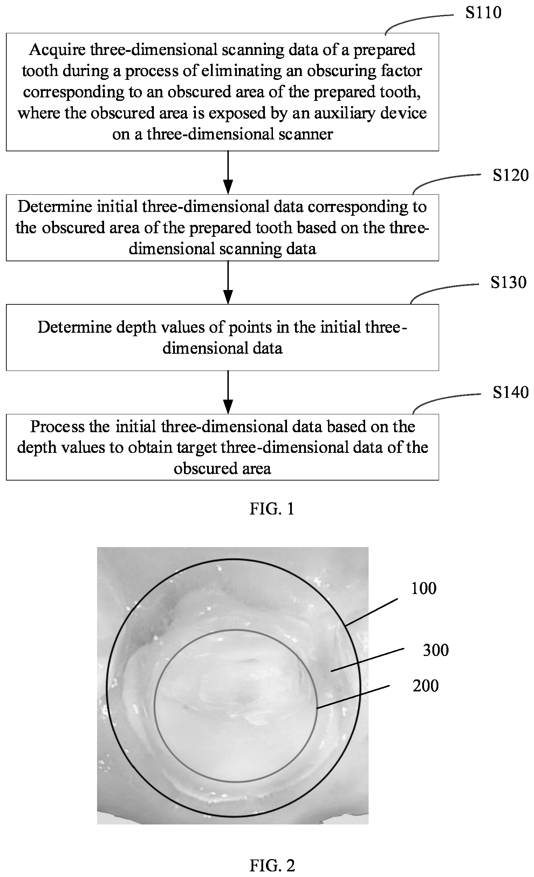

The method for acquiring three-dimensional data provided by the embodiments of the present disclosure will be described below with reference to FIG. 1 to FIG. 3. In the embodiments of the present disclosure, the method for acquiring three-dimensional data may be executed by an electronic device. The electronic device may include devices with communication functions such as tablet computers, desktop computers, and laptop computers, and may also include devices simulated by virtual machines or emulators.

FIG. 1 shows a schematic flowchart of a method for acquiring three-dimensional data provided by an embodiment of the present disclosure.

As shown in FIG. 1, the method for acquiring three-dimensional data may include the following steps.

In S110, three-dimensional scanning data of a prepared tooth is acquired during a process of eliminating an obscuring factor corresponding to an obscured area of the prepared tooth, where the obscured area is exposed by an auxiliary device configured on a three-dimensional scanner.

In this embodiment, to acquire scanning data of the obscured area around the prepared tooth, during the process of using the auxiliary device configured on the three-dimensional scanner to expose the obscured area around the prepared tooth, the obscured area is exposed to facilitate a camera of the three-dimensional scanner in acquiring the three-dimensional scanning data of the obscured area. Then, the three-dimensional scanner sends the acquired three-dimensional scanning data to the electronic device, enabling the electronic device to determine the three-dimensional data of the obscured area around the prepared tooth based on the three-dimensional scanning data.

The three-dimensional scanning data of the prepared tooth can be understood as point cloud data of the prepared tooth, and the point cloud data may be presented to the user in a form of an intraoral image.

The auxiliary device includes, but is not limited to, an air gun or a retraction device on the three-dimensional scanner. During the scanning process of the three-dimensional scanner, the air gun is used to blow away the obscured area around the prepared tooth, or the retraction device is used to retract the obscured area around the prepared tooth, to expose the obscured area.

Optionally, the obscured area includes, but is not limited to, a margin shoulder area, and the obscuring factor includes gingiva or other impurities. In many cases, the margin shoulder area is obscured by the gingiva of the prepared tooth. Therefore, the auxiliary device on the three-dimensional scanner is used to blow onto the gingiva of the prepared tooth, causing the margin shoulder area of the prepared tooth to be blown open and exposed, or the auxiliary device on the three-dimensional scanner is used to retract the gingiva of the prepared tooth, causing the margin shoulder area of the prepared tooth to be retracted and exposed, thereby facilitating the acquisition of three-dimensional scanning data of the prepared tooth by the three-dimensional scanner.

In S120, initial three-dimensional data corresponding to the obscured area of the prepared tooth is determined based on the three-dimensional scanning data.

In this embodiment, after the electronic device acquires the three-dimensional scanning data, the three-dimensional scanning data is reconstructed, and then the obscured area of the prepared tooth is determined based on an image that has been reconstructed to obtain the initial three-dimensional data of the obscured area.

In some embodiments, S120 may specifically include the following steps: performing a reconstruction processing on the three-dimensional scanning data to generate a three-dimensional reconstruction model of the prepared tooth; and in response to an area determination operation on the three-dimensional reconstruction model, determining the obscured area, and using the three-dimensional scanning data located within the obscured area as the initial three-dimensional data.

In other embodiments, S120 may specifically include the following steps: performing a reconstruction processing on the three-dimensional scanning data to generate the three-dimensional reconstruction model of the prepared tooth; and using a pre-trained recognition model to identify the obscured area from the three-dimensional reconstruction model of the prepared tooth, and using the three-dimensional scanning data located within the obscured area as the initial three-dimensional data.

Optionally, when the obscured area is the margin shoulder area, the initial three-dimensional data is initial margin shoulder data.

For ease of understanding, refer to the schematic diagram of a prepared tooth shown in FIG. 2. A prepared tooth area 100 includes prepared tooth tissue 200 and gingival tissue around the prepared tooth. An obscured area 300 of the prepared tooth is located within the prepared tooth area 100 and outside the prepared tooth tissue 200. The obscured area 300 in FIG. 2 may specifically be the margin shoulder area.

In S130, depth values of points in the initial three-dimensional data are determined.

It can be understood that when the auxiliary device experiences stuttering or cannot completely blow away the obscured area corresponding to the prepared tooth, the initial three-dimensional data that is directly acquired may not entirely be the three-dimensional data of the obscured area. It may also include three-dimensional data of substances such as gingiva covering the obscured area. Therefore, a post-processing of the initial three-dimensional data is needed to accurately determine data belonging to the obscured area.

In this embodiment, the initial three-dimensional data is determined from the three-dimensional scanning data acquired by the camera of the three-dimensional scanner in different scanning poses. Therefore, different points in the initial three-dimensional data correspond to different image planes. Consequently, each of the points in the initial three-dimensional data can be transformed to a same image plane, and the depth value of each point in the initial three-dimensional data can be determined in the same image plane.

In S140, the initial three-dimensional data is processed based on the depth values to obtain target three-dimensional data of the obscured area.

In practical applications, a depth difference between points within the obscured area is small, while a depth difference between a point within the obscured area and a point covered by substances like gingiva is large. Based on this, this embodiment may adopt, but is not limited to, the following manner to determine the target three-dimensional data of the prepared tooth:
S1401, a reference point is obtained from the initial three-dimensional data according to the depth values of the points in the initial three-dimensional data, and other points in the initial three-dimensional data except for the reference point are taken as points to be processed, where the reference point is a point within the obscured area.
S1402, the target three-dimensional data is determined from the initial three-dimensional data based on the depth values of the points to be processed and the depth value of the reference point in the initial three-dimensional data.

For S1401, the reference point may be a point with a largest depth value in the initial three-dimensional data, a point with a second largest depth value, or a point whose depth value is a preset proportion of a maximum depth value, which is not limited herein. Optionally, the preset proportion may be 10%, 20%, or other values.

Where S1402 specifically includes: calculating a depth difference between the depth value of each of the points to be processed and the depth value of the reference point; selecting, from the points to be processed, points each of which is corresponding to the depth difference less than or equal to a preset depth threshold as target points; and determining the target points and the reference point as the target three-dimensional data.

The preset depth threshold may be set based on experience.

Optionally, when the obscured area is the margin shoulder area and the initial three-dimensional data is initial margin shoulder data, the target three-dimensional data is target margin shoulder data.

It can be understood that if the depth difference between the depth value of a point to be processed and the depth value of the reference point is less than or equal to the preset depth threshold, it indicates that the point to be processed is the point within the obscured area. This point to be processed is taken as the target point, and the target point and the reference point are taken as the target three-dimensional data. Conversely, if the depth difference between the depth value of a point to be processed and the depth value of the reference point is greater than the preset depth threshold, it indicates that the point to be processed is not the point within the obscured area, and this point to be processed is discarded.

Through the above manner, the reference point can be determined from the obscured area, and based on the depth differences between the points to be processed (other than the reference point) and the reference point, it can be determined whether the point to be processed is the point within the obscured area, thereby accurately determining the target three-dimensional data belonging to the obscured area based on the depth values of the points in the initial three-dimensional data.

The method for acquiring three-dimensional data of the embodiments of the present disclosure acquires three-dimensional scanning data of the prepared tooth during the process of eliminating the obscuring factor corresponding to the obscured area of the prepared tooth, where the obscured area is exposed by the auxiliary device on the three-dimensional scanner; determines the initial three-dimensional data corresponding to the obscured area of the prepared tooth based on the three-dimensional scanning data; determines depth values of points in the initial three-dimensional data; and processes the initial three-dimensional data based on the depth values to obtain target three-dimensional data of the obscured area. Thereby, during the process of using the auxiliary device to eliminate the obscuring factor corresponding to the obscured area of the prepared tooth, the target three-dimensional data of the obscured area is determined according to the depth values of the points in the scanned initial three-dimensional data of the prepared tooth. In this way, a gingival retraction operation on the user is not required, avoiding discomfort for the user, while also ensuring the acquisition efficiency and accuracy of the three-dimensional data of the obscured area.

In another implementation of the present disclosure, a specific explanation is provided for the method of determining the depth values of the points in the initial three-dimensional data.

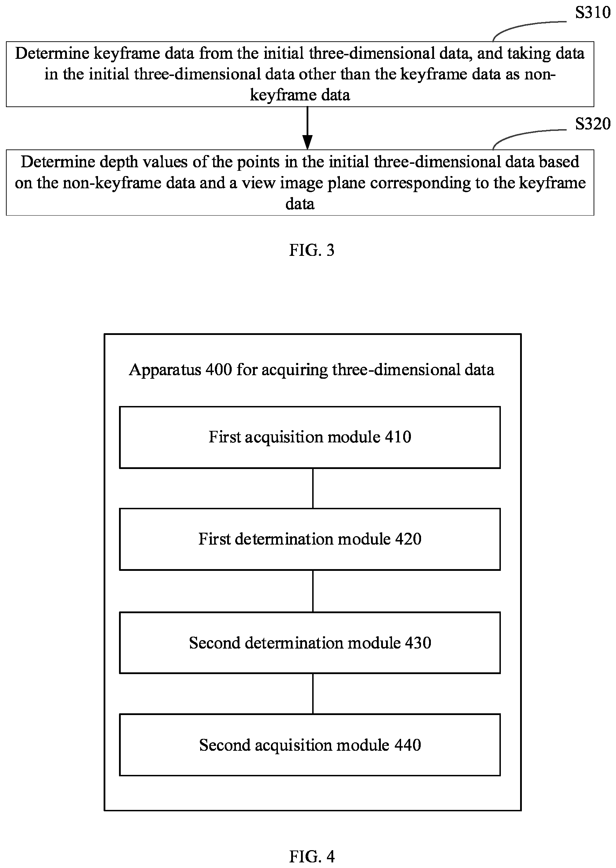

FIG. 3 shows a schematic flowchart of S130 provided by an embodiment of the present disclosure.

As shown in FIG. 3, the specific implementation method of S130 may include the following steps.

In S310, keyframe data is determined from the initial three-dimensional data, and data in the initial three-dimensional data other than the keyframe data is taken as non-keyframe data.

Since the non-keyframe data is data in the initial three-dimensional data other than the keyframe data, the non-keyframe data can also be understood as single-frame data associated with the keyframe data.

In some embodiments, the method for determining the keyframe data specifically includes: determining the keyframe data from the initial three-dimensional data based on timestamps carried by the initial three-dimensional data.

Specifically, the initial three-dimensional data may include data of multiple consecutive timestamps (e.g., 10 seconds), and each timestamp includes multi-frame data. Then, one frame of data may be randomly selected from each timestamp as the keyframe for that timestamp, thereby determining the keyframe data in the initial three-dimensional data. In other cases, the first frame of data, the last frame of data, or any intermediate frame of data from each timestamp may be selected as the keyframe for that timestamp, thereby determining the keyframe data in the initial three-dimensional data.

In other embodiments, the keyframe data is determined from the initial three-dimensional data based on coordinate data of each points in the initial three-dimensional data.

Specifically, according to the coordinate data of each point in the initial three-dimensional data, one frame of data is selected as keyframe data at intervals of a specified distance on a x-axis, a y-axis, or a z-axis. Optionally, the specified distance may be a pre-determined empirical value or may be determined based on a scanning trajectory of the three-dimensional scanner.

In yet other embodiments, the keyframe data is determined from the initial three-dimensional data based on common feature points carried by the initial three-dimensional data.

Specifically, one or more frames of data carrying different common feature points are selected from the initial three-dimensional data as keyframe data, or one or more frames of data carrying a preset number of different common feature points are selected from the initial three-dimensional data as keyframe data.

In S320, depth values of points in the initial three-dimensional data are determined based on the non-keyframe data and a view image plane corresponding to the keyframe data.

In this embodiment, optionally, S320 specifically includes the following steps:
S3201, the non-keyframe data is transformed from a world coordinate system to a keyframe coordinate system corresponding to the keyframe data;
S3202, first parameters corresponding to the keyframe data are determined, and second parameters corresponding to the non-keyframe data are determined, where the first parameters include first intrinsic parameters and first extrinsic parameters of the camera of the three-dimensional scanner at a time when collecting the keyframe data, and the second parameters include second intrinsic parameters and second extrinsic parameters of the camera of the three-dimensional scanner at a time when collecting the non-keyframe data;
S3203, based on the first parameters and the second parameters, the non-keyframe data in the keyframe coordinate system is transformed to the view image plane corresponding to the keyframe data;
S3204, in the view image plane, a first depth value of each point in the keyframe data and a second depth value of each point in the non-keyframe data are determined, the first depth value and the second depth value are taken as the depth values of the points in the initial three-dimensional data.

Where the keyframe coordinate system can be understood as a camera coordinate system of the camera of the three-dimensional scanner at the time when collecting the keyframe. In S3201, specifically, based on the first intrinsic parameters and first extrinsic parameters of the camera at the time when collecting the keyframe data and the second intrinsic parameters and second extrinsic parameters of the camera at the time when collecting the non-keyframe data, the non-keyframe data is transformed from the world coordinate system to the keyframe coordinate system corresponding to the keyframe data.

The view image plane corresponding to the keyframe data can be understood as a pixel coordinate system corresponding to the keyframe. Specifically, after determining the first parameters and the second parameters, based on the first parameters and the second parameters, the non-keyframe data in the keyframe coordinate system is reprojected to the view image plane corresponding to the keyframe data, enabling the calculation of the first depth values of the points in the keyframe data and the second depth values of the points in the non-keyframe data in the view image plane, thereby obtaining the depth values of the points in the initial three-dimensional data.

Thus, the keyframe data and the non-keyframe data are first determined from the initial three-dimensional data, and the depth values of the points in the initial three-dimensional data are determined through coordinate transformation of the keyframe data and the non-keyframe data, ensuring the accuracy of the depth values.

To further improve the efficiency of determining the depth values, thereby improving the efficiency of determining the target three-dimensional data, before S3201, the method further includes:
Determining an overlapping region between the non-keyframe data and the keyframe data.

Correspondingly, S3201 specifically includes: transforming the non-keyframe data within the overlapping region from the world coordinate system to the keyframe coordinate system.

Correspondingly, S3203 specifically includes: based on the first parameters and the second parameters, transforming the non-keyframe data within the overlapping region in the keyframe coordinate system to the view image plane corresponding to the keyframe data.

Correspondingly, S3204 specifically includes: determining, in the view image plane, the first depth value of each point in the keyframe data within the overlapping region and the second depth value of each point in the non-keyframe data within the overlapping region.

The overlapping region may be interpreted as a partial region in which the non-keyframe data is visible in the keyframe data, or as a partial region in which the keyframe data is visible in the non-keyframe data.

In one case, the method for determining the overlapping region includes: determining the overlapping region according to an overlap ratio between all the keyframe data and the non-keyframe data.

In another case, the method for determining the overlapping region includes: determining, in the world coordinate system, first coordinate data of each point in the keyframe data and second coordinate data of each point in the non-keyframe data; determining a first center point of the keyframe data and a second center point of the non-keyframe data according to the first coordinate data and the second coordinate data, and determining a first distribution range of the keyframe data and a second distribution range of the non-keyframe data; calculating a first distance between the first center point and the second center point in the world coordinate system according to the first coordinate data of the first center point and the second coordinate data of the second center point; and determining the overlapping region between the non-keyframe data and the keyframe data according to the first distance in the world coordinate system, the first distribution range, and the second distribution range.

In another case, the method for determining the overlapping region includes: transforming the keyframe data and the non-keyframe data from the world coordinate system to a camera coordinate system of the keyframe or a camera coordinate system of the non-keyframe; determining third coordinate data of each point in the keyframe data and fourth coordinate data of each point in the non-keyframe data in the camera coordinate system of the keyframe or the camera coordinate system of the non-keyframe; determining a third center point of the keyframe data and a fourth center point of the non-keyframe data according to the third coordinate data and the fourth coordinate data, and determining a third distribution range of the keyframe data and a fourth distribution range of the non-keyframe data; calculating a second distance between the third center point and the fourth center point in the camera coordinate system of the keyframe or the camera coordinate system of the non-keyframe according to the third coordinate data of the third center point and the fourth coordinate data of the fourth center point; and determining the overlapping region between the non-keyframe data and the keyframe data according to the second distance in the camera coordinate system of the keyframe or the camera coordinate system of the non-keyframe, the third distribution range, and the fourth distribution range.

In this way, the coordinate transformation is only performed on the overlapping region between the keyframe and the non-keyframe, enabling the determination of the first depth values of the points in the keyframe data and the second depth values of the points in the non-keyframe data in the view image plane corresponding to the keyframe data. Thus, the depth values of the points in the initial three-dimensional data are quickly determined based only on the overlapping region.

The present disclosure also provides an apparatus for acquiring three-dimensional data for implementing the above-described three-dimensional data acquisition method, which will be described below with reference to FIG. 4. In the embodiments of the present disclosure, the apparatus for acquiring three-dimensional data may be an electronic device. The electronic device may include devices with communication functions such as tablet computers, desktop computers, and laptop computers, and may also include devices simulated by virtual machines or emulators.

FIG. 4 shows a schematic structural diagram of an apparatus for acquiring three-dimensional data provided by an embodiment of the present disclosure.

As shown in FIG. 4, an apparatus 400 for acquiring three-dimensional data may include:
A first acquisition module 410 configured to acquire three-dimensional scanning data of a prepared tooth during a process of eliminating an obscuring factor corresponding to an obscured area of the prepared tooth, where the obscured area is exposed by an auxiliary device on a three-dimensional scanner;
A first determination module 420 configured to determine initial three-dimensional data corresponding to the obscured area of the prepared tooth based on the three-dimensional scanning data;
A second determination module 430 configured to determine depth values of the points in the initial three-dimensional data; and
A second acquisition module 440 configured to process the initial three-dimensional data based on the depth value of each point to obtain target three-dimensional data of the obscured area.

The apparatus for acquiring three-dimensional data of the embodiments of the present disclosure acquires the three-dimensional scanning data of the prepared tooth during the process of eliminating the obscuring factor corresponding to the obscured area of the prepared tooth, where the obscured area is exposed by the auxiliary device on the three-dimensional scanner; determines the initial three-dimensional data corresponding to the obscured area of the prepared tooth based on the three-dimensional scanning data; determines the depth value of each point in the initial three-dimensional data; and processes the initial three-dimensional data based on the depth values to obtain the target three-dimensional data of the obscured area. Thereby, during the process of using the auxiliary device to eliminate the obscuring factor corresponding to the obscured area of the prepared tooth, the target three-dimensional data of the obscured area is determined according to the depth values of the points in the scanned initial three-dimensional data of the prepared tooth. In this way, the gingival retraction operation on the user is not required, avoiding discomfort for the user, while also ensuring the acquisition efficiency and accuracy of the three-dimensional data of the obscured area.

In some embodiments of the present disclosure, the first determination module 420 includes:
A reconstruction unit configured to perform a reconstruction processing on the three-dimensional scanning data to generate a three-dimensional reconstruction model of the prepared tooth;
A first determination unit configured to, in response to an area determination operation on the three-dimensional reconstruction model, determine the obscured area, and use the three-dimensional scanning data located within the obscured area as the initial three-dimensional data; and/or,
A second determination unit configured to use a pre-trained recognition model to identify the obscured area from the three-dimensional reconstruction model, and use the three-dimensional scanning data located within the obscured area as the initial three-dimensional data.

In some embodiments of the present disclosure, the second determination module 430 includes:
A third determination unit configured to determine keyframe data from the initial three-dimensional data, and use data in the initial three-dimensional data other than the keyframe data as non-keyframe data;
A fourth determination unit configured to determine depth values of the points in the initial three-dimensional data based on the non-keyframe data and a view image plane corresponding to the keyframe data.

In some embodiments of the present disclosure, the third determination unit is specifically configured to:
Determine keyframe data from the initial three-dimensional data based on timestamps carried by the initial three-dimensional data; and/or,
Determine the keyframe data from the initial three-dimensional data based on coordinate data of each point in the initial three-dimensional data; and/or,
Determine the keyframe data from the initial three-dimensional data based on common feature points carried by the initial three-dimensional data.

In some embodiments of the present disclosure, the fourth determination unit is specifically configured to:
Transform the non-keyframe data from a world coordinate system to a keyframe coordinate system corresponding to the keyframe data;
Determine first parameters corresponding to the keyframe data, and determine second parameters corresponding to the non-keyframe data, where the first parameters include first intrinsic parameters and first extrinsic parameters of a camera of the three-dimensional scanner at a time when collecting the keyframe data, and the second parameters include second intrinsic parameters and second extrinsic parameters of the camera of the three-dimensional scanner at a time when collecting the non-keyframe data;
Transform the non-keyframe data in the keyframe coordinate system to the view image plane corresponding to the keyframe data based on the first parameters and the second parameters;
In the view image plane, determine a first depth value of each point in the keyframe data and a second depth value of each point in the non-keyframe data, and take the first depth values and the second depth values as the depth values of the points in the initial three-dimensional data.

In some embodiments of the present disclosure, the second determination module 430 further includes:
A fifth determination unit configured to determine an overlapping region between the non-keyframe data and the keyframe data.
In some embodiments of the present disclosure, the fourth determination unit is specifically configured to: transform the non-keyframe data within the overlapping region from the world coordinate system to the keyframe coordinate system;
Transform the non-keyframe data within the overlapping region in the keyframe coordinate system to the view image plane corresponding to the keyframe data based on the first parameters and the second parameters; and
In the view image plane, determine the first depth value of each point in the keyframe data within the overlapping region and the second depth value of each point in the non-keyframe data within the overlapping region.

In some embodiments of the present disclosure, the second acquisition module 440 includes:
A sixth determination unit configured to obtain a reference point from the initial three-dimensional data according to the depth values of the points in the initial three-dimensional data, and use other points in the initial three-dimensional data except for the reference point as points to be processed, where the reference point is a point within the obscured area;
A seventh determination unit configured to determine the target three-dimensional data from the initial three-dimensional data based on the depth values of the points to be processed and the depth value of the reference point in the initial three-dimensional data.

In some embodiments of the present disclosure, the seventh determination unit is specifically configured to:
Calculate a depth difference between the depth value of each of the points to be processed and the depth value of the reference point;
Select from the points to be processed, points each of which is corresponding to the depth difference less than or equal to a preset depth threshold as target points; and
Determine the target points and the reference point as the target three-dimensional data.

In some embodiments of the present disclosure, the obscured area is a margin shoulder area, the initial three-dimensional data is initial margin shoulder data, and the target three-dimensional data is target margin shoulder data.

It should be noted that the apparatus 400 for acquiring three-dimensional data shown in FIG. 4 can execute the steps in the method embodiments shown in FIG. 1 to FIG. 3 and achieve the processes and effects in the method embodiments shown in FIG. 1 to FIG. 3, which will not be repeated here.

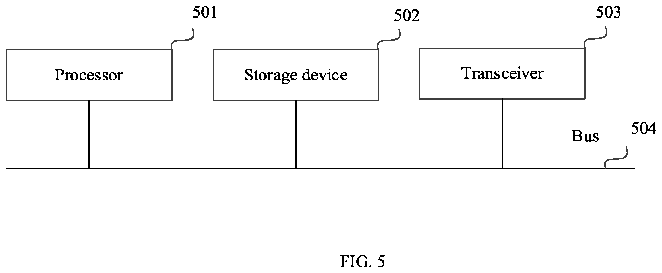

FIG. 5 shows a schematic structural diagram of an electronic device provided by an embodiment of the present disclosure.

As shown in FIG. 5, the electronic device may include a processor 501 and a storage device 502 storing computer program instructions.

Specifically, the processor 501 may include a central processing unit (CPU), or an application specific integrated circuit (ASIC), or one or more integrated circuits configured to implement the embodiments of the present application.

The storage device 502 may include a mass storage for information or instructions. By way of example and not limitation, the storage device 502 may include a hard disk drive (HDD), a floppy disk drive, flash memory, an optical disc, a magneto-optical disc, magnetic tape, or a universal serial bus (USB) drive, or a combination of two or more of these. Where appropriate, the storage device 502 may include removable or non-removable (or fixed) medium. Where appropriate, the storage device 502 may be internal or external to the integrated gateway device. In specific embodiments, the storage device 502 is a non-volatile solid-state memory. In specific embodiments, the storage device 502 includes a read-only memory (ROM). Where appropriate, the ROM may be a mask-programmed ROM, a programmable ROM (PROM), an erasable PROM (EPROM), an electrically erasable PROM (EEPROM), an electrically alterable ROM (EAROM), or flash memory, or a combination of two or more of these.

The processor 501 executes the steps of the method for acquiring three-dimensional data provided by the embodiments of the present disclosure by reading and executing the computer program instructions stored in the storage device 502.

In an example, the electronic device may further include a transceiver 503 and a bus 504. As shown in FIG. 5, the processor 501, the storage device 502, and the transceiver 503 are connected via the bus 504 and communicate with each other.

The bus 504 includes hardware, software, or both. For example and not limitation, the bus may include an Accelerated Graphics Port (AGP) or other graphics bus, an Extended Industry Standard Architecture (EISA) bus, a Front Side Bus (FSB), a Hyper Transport (HT) interconnect, an Industry Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB), or another suitable bus, or a combination of two or more of the above. Where appropriate, the bus 504 may include one or more buses. Although specific buses are described and illustrated in the embodiments of the present application, any suitable bus or interconnect is considered by the present application.

The following are embodiments of a computer-readable storage medium provided by the embodiments of the present disclosure. The computer-readable storage medium belongs to the same inventive concept as the method for acquiring three-dimensional data in the above embodiments. Details not exhaustively described in the embodiments of the computer-readable storage medium may refer to the embodiments of the above three-dimensional data acquisition method.

This embodiment provides a storage medium including computer-executable instructions. When the computer-executable instructions are executed by a computer processor, a method for acquiring three-dimensional data is implemented. The method includes:
Acquiring three-dimensional scanning data of a prepared tooth during a process of eliminating an obscuring factor corresponding to an obscured area of the prepared tooth, where the obscured area is exposed by an auxiliary device on a three-dimensional scanner;
Determining initial three-dimensional data corresponding to the obscured area of the prepared tooth based on the three-dimensional scanning data;
Determining depth values of points in the initial three-dimensional data; and
Processing the initial three-dimensional data based on the depth values to obtain target three-dimensional data of the obscured area.

Certainly, the computer-executable instructions of the storage medium including computer-executable instructions provided by the embodiments of the present disclosure are not limited to the above method operations, and may also perform related operations of any three-dimensional data acquisition method provided by the embodiments of the present disclosure.

From the above description of the implementations, those skilled in the art may clearly understand that the present disclosure may be implemented by means of software plus necessary general-purpose hardware, or of course, may also be implemented by hardware, but in many cases, the former is a better implementation. Based on such understanding, the essence of the technical solutions of the present disclosure or the part contributing to the prior art may be embodied in the form of a software product. The computer software product may be stored in a computer-readable storage medium, such as a floppy disk, a read-only memory (ROM), a random access memory (RAM), a flash memory (FLASH), a hard disk, or an optical disc of a computer, and includes several instructions for causing a computer cloud platform (which may be a personal computer, a server, or a network cloud platform, etc.) to execute the method for acquiring three-dimensional data provided by the various embodiments of the present disclosure.

Note that the above are only preferred embodiments of the present disclosure and the applied technical principles. Those skilled in the art will understand that the present disclosure is not limited to the specific embodiments described herein. For those skilled in the art, various obvious changes, readjustments, and substitutions can be made without departing from the protection scope of the present disclosure. Therefore, although the present disclosure has been described in detail through the above embodiments, the present disclosure is not limited to the above embodiments. Without departing from the concept of the present disclosure, more other equivalent embodiments may be included, and the scope of the present disclosure is determined by the scope of the appended claims.

### INDUSTRIAL APPLICABILITY

The method for acquiring three-dimensional data provided by the present disclosure, during the process of using an auxiliary device to eliminate an obscuring factor corresponding to an obscured area of a prepared tooth, determines target three-dimensional data of the obscured area according to the depth values of points in the scanned initial three-dimensional data of the prepared tooth. Thereby, a gingival retraction operation on the user is not required, which not only avoids discomfort for the user but also ensures the acquisition efficiency and accuracy of the three-dimensional data of the obscured area, exhibiting strong industrial applicability.

## Claims

1. A method for acquiring three-dimensional data, comprising:
acquiring three-dimensional scanning data of a prepared tooth during a process of eliminating an obscuring factor corresponding to an obscured area of the prepared tooth, wherein the obscured area is exposed by an auxiliary device on a three-dimensional scanner;
determining initial three-dimensional data corresponding to the obscured area of the prepared tooth based on the three-dimensional scanning data;
determining depth values of points in the initial three-dimensional data; and
processing the initial three-dimensional data based on the depth values to obtain target three-dimensional data of the obscured area.

2. The method according to claim 1, wherein the determining initial three-dimensional data corresponding to the obscured area of the prepared tooth based on the three-dimensional scanning data comprises:
performing a reconstruction processing on the three-dimensional scanning data to generate a three-dimensional reconstruction model of the prepared tooth;
in response to an area determination operation on the three-dimensional reconstruction model, determining the obscured area, and using three-dimensional scanning data located within the obscured area as the initial three-dimensional data; and/or,
using a pre-trained recognition model to identify the obscured area from the three-dimensional reconstruction model, and using the three-dimensional scanning data located within the obscured area as the initial three-dimensional data.

3. The method according to claim 1, wherein the determining depth values of the points in the initial three-dimensional data comprises:
determining keyframe data from the initial three-dimensional data, and taking data in the initial three-dimensional data other than the keyframe data as non-keyframe data; and
determining depth values of the points in the initial three-dimensional data based on the non-keyframe data and a view image plane corresponding to the keyframe data.

4. The method according to claim 3, wherein the determining keyframe data from the initial three-dimensional data comprises:
determining the keyframe data from the initial three-dimensional data based on timestamps carried by the initial three-dimensional data; and/or,
determining the keyframe data from the initial three-dimensional data based on coordinate data of points in the initial three-dimensional data; and/or,
determining the keyframe data from the initial three-dimensional data based on common feature points carried by the initial three-dimensional data.

5. The method according to claim 3, wherein the determining depth values of the points in the initial three-dimensional data based on the non-keyframe data and the view image plane corresponding to the keyframe data comprises:
transforming the non-keyframe data from a world coordinate system to a keyframe coordinate system corresponding to the keyframe data;
determining first parameters corresponding to the keyframe data, and determining second parameters corresponding to the non-keyframe data, wherein the first parameters comprise first intrinsic parameters and first extrinsic parameters of a camera of the three-dimensional scanner when collecting the keyframe data, and the second parameters comprise second intrinsic parameters and second extrinsic parameters of the camera of the three-dimensional scanner when collecting the non-keyframe data;
transforming the non-keyframe data in the keyframe coordinate system to the view image plane corresponding to the keyframe data based on the first parameters and the second parameters; and
determining, in the view image plane, a first depth value of each point in the keyframe data and a second depth value of each point in the non-keyframe data, and taking the first depth values and the second depth values as the depth values of the points in the initial three-dimensional data.

6. The method according to claim 5, wherein before transforming the non-keyframe data from the world coordinate system to the keyframe coordinate system corresponding to the keyframe data, the method further comprises:
determining an overlapping region between the non-keyframe data and the keyframe data.

7. The method according to claim 6, wherein the transforming the non-keyframe data from the world coordinate system to the keyframe coordinate system corresponding to the keyframe data comprises:
transforming the non-keyframe data within the overlapping region from the world coordinate system to the keyframe coordinate system;
correspondingly, the transforming the non-keyframe data in the keyframe coordinate system to the view image plane corresponding to the keyframe data based on the first parameters and the second parameters comprises:
transforming the non-keyframe data within the overlapping region in the keyframe coordinate system to the view image plane corresponding to the keyframe data based on the first parameters and the second parameters;
correspondingly, the determining, in the view image plane, the first depth value of each point in the keyframe data and the second depth value of each point in the non-keyframe data comprises:
determining, in the view image plane, the first depth value of each point in the keyframe data within the overlapping region and the second depth value of each point in the non-keyframe data within the overlapping region.

8. The method according to claim 1, wherein the processing the initial three-dimensional data based on the depth values to obtain target three-dimensional data of the obscured area comprises:
obtaining a reference point from the initial three-dimensional data according to the depth values of the points in the initial three-dimensional data, and taking other points in the initial three-dimensional data except for the reference point as points to be processed, wherein the reference point is a point within the obscured area; and
determining the target three-dimensional data from the initial three-dimensional data based on the depth values of the points to be processed and the depth value of the reference point in the initial three-dimensional data.

9. The method according to claim 8, wherein the determining the target three-dimensional data from the initial three-dimensional data based on the depth values of the points to be processed and the depth value of the reference point in the initial three-dimensional data comprises:
calculating a depth difference between the depth value of each of the points to be processed and the depth value of the reference point;
selecting from the points to be processed, points each of which is corresponding to the depth difference less than or equal to a preset depth threshold as target points; and
determining the target points and the reference point as the target three-dimensional data.

10. The method according to any one of claims 1 to 9, wherein the obscured area is a margin shoulder area, the initial three-dimensional data is initial margin shoulder data, and the target three-dimensional data is target margin shoulder data.

11. An apparatus for acquiring three-dimensional data, comprising:
a first acquisition module configured to acquire three-dimensional scanning data of a prepared tooth during a process of eliminating an obscuring factor corresponding to an obscured area of the prepared tooth, wherein the obscured area is exposed by an auxiliary device on a three-dimensional scanner;
a first determination module configured to determine initial three-dimensional data corresponding to the obscured area of the prepared tooth based on the three-dimensional scanning data;
a second determination module configured to determine depth values of points in the initial three-dimensional data; and
a second acquisition module configured to process the initial three-dimensional data based on the depth values to obtain target three-dimensional data of the obscured area.

12. An electronic device, comprising:
a processor, a storage device, and instructions stored on the storage device and executable by the processor;
wherein the processor reads the instructions from the storage device and, upon executing the instructions, implements the method according to any one of claims 1-10.

13. A computer-readable storage medium having a computer program stored thereon, wherein the storage medium stores the computer program, and when the computer program is executed by a processor, the processor is caused to implement the method according to any one of claims 1-10.
